(19) Europäisches Patentamt
European Patent Office
Office européen des brevets

(11) Numéro de publication: **0 074 296**
**B1**

# (12) FASCICULE DE BREVET EUROPEEN

(45) Date de publication du fascicule du brevet: **06.11.85**

(51) Int. Cl.[4]: **C 08 L 69/00**, C 08 K 5/53

(21) Numéro de dépôt: **82401525.9**

(22) Date de dépôt: **12.08.82**

(54) **Composition de résine synthétique ayant une bonne résistance au feu renfermant un polycarbonate, un additif ignifugeant hemi-ester d'acide phosphonique, et éventuellement d'autres additifs et/ou des charges, et nouveaux hemi-esters d'acides phosphoniques.**

(30) Priorité: **26.08.81 FR 8116332**

(43) Date de publication de la demande: **16.03.83 Bulletin 83/11**

(45) Mention de la délivrance du brevet: **06.11.85 Bulletin 85/45**

(84) Etats contractants désignés: **BE DE GB IT NL**

(56) Documents cités:
**EP-A-0 023 650**
**DE-A-2 854 259**
**FR-A-1 463 543**
**FR-A-2 204 658**

(73) Titulaire: **ATO CHIMIE, Société Anonyme dite:, La Défense 5 12/16 Allée des Vosges, F-92400 Courbevoie (FR)**

(72) Inventeur: **Guerin, Bernard, 3, Clos de Bures, F-91400 Bures/Yvette (FR)**
Inventeur: **Poisson, Pierre, Le Mascrier, F-27300 Bernay (FR)**
Inventeur: **Sturtz, Georges, 22, Bd Léon Blum, F-29200 Brest (FR)**

(74) Mandataire: **Boillot, Marc, SOCIETE NATIONALE ELF AQUITAINE Division Propriété Industrielle Tour Elf, F-92078 Paris la Défense Cédex 45 (FR)**

**EP 0 074 296 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention a trait à une composition de résine synthétique ayant une bonne résistance au feu renfermant un polycarbonate, un additif ignifugeat hémi-ester d'acide phosphonique, et éventuellement d'autres additifs et/ou des charges, cette composition étant utilisable pour la production d'objets conformés. Elle concerne encore les hémi-esters en tant que produits nouveaux.

Dans le brevet américain 4 036 809, on propose d'utiliser des diesters d'acides xylènephosphoniques halogénés sur le noyau comme additifs ignifugeants de polymères divers que polyesters, polystyrène, polyuréthanes, polyoléfines, et même polycarbonates, ces diesters étant ajoutés au polymère à ignifuger en quantités se situant entre quelques pour cents et quelques dizaines de pour cents. La nécessité, pour obtenir une bonne résistance au feu du polymère ignifugé, d'utiliser des quantités relativement importantes de ces additifs rend l'emploi de tels additifs particulièrement onéreux a l'échelle industrielle. D'autre part la présence de concentration importantes d'additifs dans le polymère peut avoir une influence défavorable sur les propriétés mécaniques du polymère ignifugé et sur son comportement au cours de sa transformation en objets conformés.

On connaît par ailleurs l'éfficacité des sels de métaux alcalins, qui seraient des catalyseurs de recombinaison de radicaux donc de inhibiteurs de flamme.

Dans la demande de brevet français N° 7 902 836 du 5 Février 1979 (publication N° 2 447 940) au nom du demandeur, on a montré que l'incorporation de groupements hémi-esters phosphoniques dans les chaînes d'un polycarbonate, obtenu par réaction de bisphénol A et de phosgène, en remplaçant 0,5 à 2% molaire du bisphénol A par un hémi-ester alcalin d'acide bis(hydroxy-4-phényl) alkylphosphonique, conduisait à un copolycarbonate ayant une bonne résistance au feu. Toutefois l'incorporation du composé hémi-ester phosphonique, même en quantités aussi faibles que 0,5 à 2% molaire par rapport au bisphénol A, dans les chaînes du polycarbonate par le biais de la copolycondensation précitée, peut provoquer des perturbations de la cinétique de la réaction de polycondensation et occasionner des difficultés de mise en œuvre, surtout à l'échelle industrielle, pour obtenir un produit ayant les caractéristiques souhaitées, notamment en ce qui concerne les masses moléculaires.

Dans le brevet français N° 1 463 543, on à également proposé de stabiliser à l'oxydation, due à la chaleur et à la lumière, des polymères divers parmi lesquels figurent les polycarbonates et simultanément d'améliorer l'affinité tinctoriale de ces polymères en leur incorporant de 0,05 à 10% en poids du polymère, d'un hémi-ester métallique d'acide (hyroxyphényl)-alkylphosphonique substitué sur le noyau benzénique par deux groupements alkyles inférieurs, chacun en ortho du grupement hydroxyle. Toutefois de tels additifs n'ont que peu ou pas d'effet favorable sur le comportement au feu du polycarbonate auquel ils sont ajoutés.

On a maintenant trouvé que l'on pouvait obtenir des compositions de résine synthétique à base de polycarbonate, et en particulier de polycarbonate dérivé du bisphénol A, présentant un comportement au feu au moins équivalent à celui des copolycarbonates de bisphénol A et d'hémi-esters alcalins d'acides bis (hydroxy-4 phényl) alkylphosphoniques, en incorporant au polycarbonate une quantité très faible, généralement 0,1‰ à 4‰, d'additifs ignifugeants non réactifs du type des hémi-esters alcalins d'acides phosphoniques dérivant d'hydrocarbures aromatiques ou cycloaliphatiques .

L'invention concerne donc une composition de résine synthétique ayant une bonne résistance au feu, renfermant un polycarbonate, un additif ignifugeant non réactif dérivé d'acide phosphonique, et éventuellement d'autres additifs et/ou des charges et se caractérisant en ce que l'additif ignifugeant répond à la formule générale

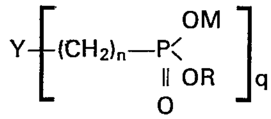

dans laquelle:

Y désigne un reste organique q-valent dérivé, par perte de q atomes d'hydrogène, d'un membre du groupe formé par les cycloalcanes en $C_6$ à $C_8$, les hydrocarbures benzéniques en $C_6$ à $C_{12}$, les hydrocarbures aromatiques di- ou trinucléaires à noyau enchaînés en $C_{12}$ à $C_{20}$, les hydrocarbures aromatiques di- ou trinucléaires à noyaux condensés en $C_{10}$ à $C_{20}$, les composés aromatiques de formule Ar-Z-Ar dans laquelle Ar est un radical arylique monovalent en $C_6$ à $C_{12}$ et Z représente -S-, -O-, $-SO_2-$, -SO-, -CO-, et les dérivés bromés ou chlorés desdits hydrocarbures et composés aromatiques,

q est un nombre prenant les valeurs 1, 2, 3,

n est un nombre égal à 0, 1, 2,

R est un reste alcoyle en $C_1$ à $C_6$, un radical phényle ou un radical cyclohexyle, et

M désigne un atome de métal alcalin choisi parmi Li, Na, K, et de préférence K, ledit additif étant utilisé en concentration pondérale allant de 0,1‰ à 4 ‰ par rapport au polycarbonate.

Parmi les additifs précités conviennent tout particulièrement ceux qui sont définis par les formules:

I) 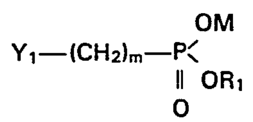 ;

II) 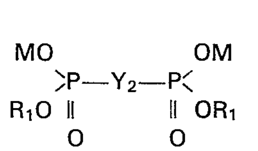 ;

III) 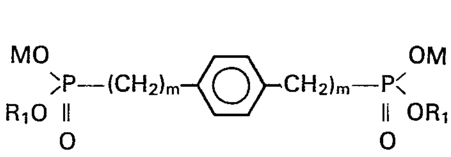 ; et

IV) 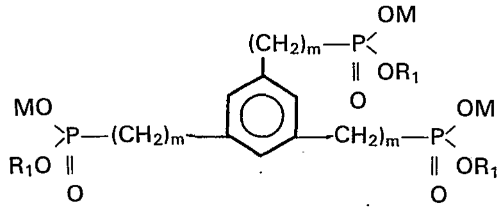

dans lesquelles:

$Y_1$ désigne un reste monovalent dérivé, par perte d'un atome d'hydrogène nucléaire, d'un composé choisi dans le groupe formé par le benzène, le toluène, l'éthylbenzène, le bromobenzène, le cyclohexane, et le diphényléther;

$Y_2$ représente un reste divalent dérivé, par perte de deux atomes d'hydrogène situés chacun sur un noyau différent, d'un composé choisi dans le groupe formé par le diphényle, le diphényloxyde, la diphénylsulfone, le diphényl-2,2 propane, et le naphtalène;

n est un nombre égal à 0, 1, 2;

m est un nombre égal à 0 ou 1;

M est un atome de Li, K, ou Na, et de préférence K;

$R_1$ désigne un radical méthyle ou éthyle.

Des additifs ignifugeants préférés suivant l'invention sont tels que:

phénylphosphonate d'éthyle et de potassium;

benzylphosphonate d'éthyle et de potassium;

benzylphosphonate de méthyle et de potassium;

bromo-4 benzylphosphonate d'éthyle et de potassium;

paraxylylène diphosphonate de diéthyle et de dipotassium;

paraxylylène diphosphonate de diméthyle et de dipotassium;

paraphénylène diphosphonate de diéthyle et de dipotassium;

cyclohexylméthylphosphonate d'éthyle et de potassium;

diphénylène-4,4' diphosphonate de diéthyle et de dipotassium.

Les hémi-esters alcalins d'acides phosphoniques, qui sont utilisés comme additifs ignifugeants suivant l'invention, sont préparés par hydrolyse alcaline des diesters correspondants.

Les diesters phosphoniques peuvent être obtenus par une réaction d'ARBUZOV entre un halogénure de formule

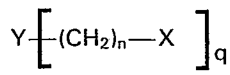

et un phosphite de trihydrocarbyle de formule

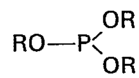 , X

désignant un halogène tel que chlore ou brome et les symboles R, Y, n q ayant les significations précédentes, suivant le schéma réactionnel ci-après:

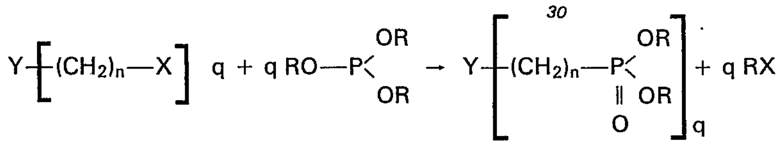

En particulier les diesters correspondant aux hémiesters de formules I à IV peuvent être obtenus par les réactions suivantes:

I) 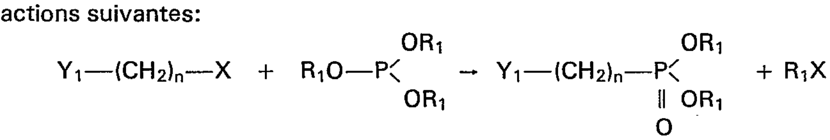

II) 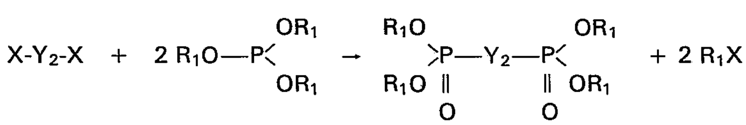

III) 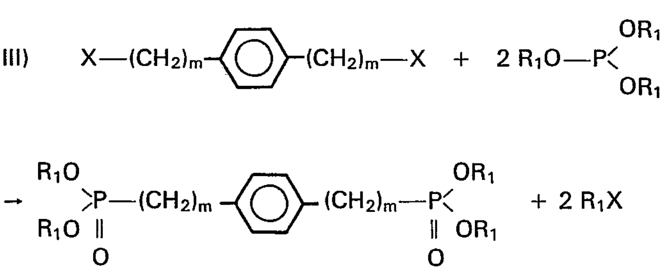

IV) 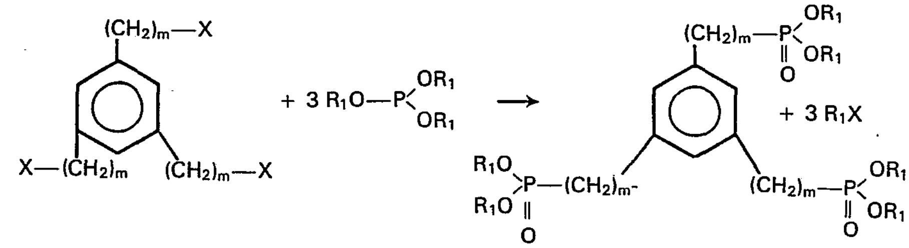

Les symboles $Y_1$, $Y_2$, X, $R_1$, n et m ont les significations données plus haut.

La réaction d'ARBUZOV d'obtention des diesters est généralement réalisée par chauffage à reflex du mélange d'halogénure et de phosphite, éventuellement dans un solvant inerte et notamment un hydrocarbure aromatique tel que benzène, toluène, xylène, en présence, si besoin est, d'un catalyseur tel que $NiCl_2$ par exemple. Après un temps de contact approprié entre les réactifs, le milieu réactionnel est soumis à une distillation pour éliminer les composés volatils qu'il renferme et obtenir le diester comme fond de distillation. Le diester brut ainsi isolé est ensuite purifié par toute technique appropriée.

L'hydrolyse alcaline permettant de former les hémi-esters phosphoniques à partir des diesters précités est réalisée avantageusement en faisant appel à un procédé dans lequel:

— on traite à reflux, pendant 1 à 10 heures, le diester phosphonique par une solution aqueuse d'un hydroxyde MOH, M représentant Li, Na, K, renfermant 5 à 15% en poids d'hydroxyde, dans un rapport molaire MOH : diester allant de 1,2 à 1,5:

— on refroidit ensuite le milieu réactionnel, et, après refroidissement, on neutralise l'excés d'hydroxyde par HCl concentré jusqu'à pH 7;

— on concentre à sec le milieu neutralisé et reprend le résidu par du méthanol;

— on élimine le MCl précipité par filtration, puis concentre le filtrat méthanolique à sec, et, si besoin est, on effectue une nouvelle reprise du résidu par le méthanol suivie, après filtration, d'une concentration à sec.

Les polycarbonates, qui peuvent être ignifugés par l'addition en très faibles concentrations des hémiesters alcalins suivant l'invention, peuvent être choisis parmi les divers polycarbonates ou copolycarbonates aromatiques dérivant d'un ou plusieurs diphénols tels que résorcinol, hydroquinone, dihydroxydiphényle, bis (hydroxyphényl) alcanes, bis (hydroxyphényl) cycloalcanes, bis (hydroxyphényl) éthers, bis (hydroxyphényl) sulfures, bis (hydroxyphényl) cétones, bis (hydroxyphényl) sulfones, bis (hydroxyphényl) sulfoxydes, $\alpha,\alpha'$- bis (hydroxyphényl) di isopropylbenzènes, et les dérivés alcoylés sur le noyau de tels diphénols.

En particulier les polycarbonates ou copolycarbonates peuvent être choisis parmi ceux dérivant d'un ou plusieurs bisphénols tels que bis (hydroxy-4 phényl)-2,2 propane, dihydroxy-4,4' diphényl, bis (hydroxy-4 phényl)-2,4 méthyl-2 butane, bis (hydroxy-4 phényl)-1,1 cyclohexane, $\alpha,\alpha'$- bis (hydroxy-4 phényl) p-di isopropylbenzène, bis (méthyl-3 hydroxy-4 phényl)-2,2 propane, bis (diméthyl-3,5 hydroxy-4 phényl) méthane, bis (diméthyl-3,5 hydroxy-4 phényl)-2,2 propane, bis (diméthyl-3,5 hydroxy-4 phényl) sulfone, bis (diméthyl-3,5 hydroxy-4 phényl)-2,4 méthyl-2 butane, bis (diméthyl-3,5 hydroxy-4 phényl)-1,1 cyclohexane, et $\alpha,\alpha'$- bis (diméthyl-3,5 hydroxy-4 phényl) p-di isopropylbenzène).

Le polycarbonates et copolycarbonates préférés sont ceux qui dérivent d'un ou plusieurs bisphénols choisis dans le groupe formé par le bis (hydroxy-4 phényl)-2,2 propane, encore appelé bisphénol A, le bis (diméthyl-3,5 hydroxy-4 phényl)-2,2 propane, et le bis (hydroxy-4 phényl)-1,1 cyclohexane.

Ces polycarbonates aromatiques, qui peuvent être préparés par les procédés bien connus de transestérification en milieu fondu entre le ou les diphénols choisis et le carbonate de diphényle ou de réaction interfaciale entre le ou les diphénols désirés et le phosgène, sont généralement thermoplastiques et possèdent des masses moléculaires viscosimétriques qui, calculées à partir de leur viscosité en solution, sont comprises entre 15 000 et 60 000 et se situent de préférence entre 20 000 et 40 000.

Comme indiqué précédemment, l'additif ignifugeant suivant l'invention est utilisé en concentration pondérale allant de 0,1‰ à 4‰, et de préférence de 0,1‰ à 1,5‰, par rapport au polycarbonate.

En plus de l'additif ignifugeant, les compositions de polycarbonate peuvent renfermer également d'autres additifs tels que des pigments, des colorants, des stabilisants vis à vis des rayons ultraviolets, des agents de démoulage; des stabilisants à la dégradation thermique et des charges. Lesdites compositions peuvent renfermer également des fibres de verre, notamment en proportions allant de 10 à 35% en poids du polycarbonate, dans le but d'améliorer la rigidité de la résine thermoplastique de polycarbonate. On peut leur adjoindre également des agents qui diminuent le gouttage tels que des polysiloxanes ou des polytétrafluoroéthylènes, et en particulier des polytétrafluoroéthylènes se présentant sous la forme d'une poudre blanche obtenue par polymérisation de tétrafluoroéthylène en émulsion aqueuse et possédant des masses moléculaires en poids comprises entre $10^5$ et $10^6$. la quantité de polytétrafluoroéthylène utilisée peut représenter 0,1% à 1% du poids du polycarbonate.

Les compositions suivant l'invention peuvent être préparées par mélange des divers ingrédients les constituant en faisant appel, pour réaliser le mélange, aux diverses techniques connues à cet effet. On peut par exemple mélanger à sec, au tonneau, le polycarbonate sous la forme de granulés avec l'additif ignifugeant et les autres additifs éventuels, puis extruder ensuite le mélange entre 260 et 290°C et réduire l'extrudat en pastilles.

Le comportement au feu des compositions de polycarbonate suivant l'invention était évalué sur des éprouvettes desdites compositions préparées par moulage par injection, à des températures entre 280 et 320°C, à partir de mélanges de polycarbonate et d'additif ignifugeant réalisés par mélangeage à sec au tonneau suivi d'une extrusion du mélange et d'une granulation de l'extrudat.

Parmi les divers essais existant pour évaluer le comportement au feu des polymères, deux essais de combustion, considérés comme particulièrement significatifs, ont été retenus pour apprécier le comportement au feu des compositions de polycarbonate suivant l'invention, à savoir d'une part l'essai de détermination de l'indice d'oxygène défini dans la norme ASTM D 2863, et d'autre part l'essai de combustion UL-94 décrit dans le Bulletin 94 des UNDERWRITERS'S LABORATORIES, qui sont définis succintement ci-après.

*Essai de détermination de l'indice d'oxygène*

Dans cet essai, on détermine la concentration minimale d'oxygène, en pourcentage en volume, encore appelée indice limite d'oxygène (en abrégé L.O.I.) contenue dans un mélange d'oxygène et d'azote en écoulement, qui est juste nécessaire pour supporter la combustion de l'éprouvette à la manière d'une bougie.

L'indice limite d'oxygène est défini par la relation

$$L.O.I. = \frac{[O_2]}{[O_2] + [N_2]} \times 100$$

dans laquelle $[O_2]$ et $[N_2]$ désignent respectivement les débits volumétriques en $cm^3/s$ de l'oxygène et de l'azote, réunis pour former le mélange comburant, à l'équilibre (combustion du type bougie).

*Essai UL - 94:*

Dans cet essai, on fixe verticalement des éprouvettes parallélépipédiques ayant respectivement 120 mm de longueur, 12,7 mm de largeur et 3,2 mm d'épaisseur.

On expose ces éprouvettes, deux fois pendant 10 secondes, à la flamme bleue d'un brûleur à gaz haute de 19 mm, la partie supérieure du brûleur étant située environ 10 mm en dessous de l'éprouvette.

Les éprouvettes sont placées à 30,5 cm au-dessus d'une couche horizontale de coton hydrophile chirurgical.

Pour classer le matériau en cours d'essai, on étudie cinq éprouvettes et affecte ledit matériau de l'un des trois classements suivants:

*Classement «94 V2»:*

. aucune éprouvette ne brûle avec flamme pendant plus de 30 secondes après chaque application de la flamme;

. la durée totale de combustion avec flamme nexcède pas 250 secondes pour les 10 applications de la flamme à chacune des séries de 5 éprouvettes;

. le matériau peut former des gouttes entflammant le coton.

*Classement «94 V1»:*

. les temps de combustion correspondent à ceux de la cotation «94 V2» mais le matériau ne forme pas de gouttes enflammant le coton.

*Classement «94 V0»:*

. aucune éprouvette ne brûle avec flamme pendant plus de 10 secondes après chaque application de la flamme;

. la durée de combustion avec flamme n'excède pas 50 secondes pour les 10 applications de la flamme;

. le matériau ne doit pas former de gouttelettes enflammant le coton.

L'invention est illustrée par les exemples suivants, donnés à titre non limitatif.

*Exemple 1*

*Préparation des additifs ignifugeants hémi-esters alcalins d'acides hydrocarbylphosphoniques*

Ces hémi-esters alcalins étaient préparés par hydrolyse alcaline des diesters correspondants en utilisant le mode opératoire suivant:

On chauffait à reflux pendant 6 heures un mélange du diester phosphonique choisi et de KOH en solution aqueuse à 10% en poids, dans un rapport molaire KOH : diester égal à 1,3. Après refroidissement à température ambiante, on neutralisait l'excès de KOH par HCl concentré jusqu'à pH 7. On concentrait ensuite à sec la phase neutralisée, puis reprenait le résidu par du méthanol. On filtrait la suspension obtenue pour éliminer le KCl précipité et concentrait à sec le filtrat méthanolique. On reprenait une nouvelle fois le résidu par du méthanol, filtrait la solution et concentrait le filtrat à sec.

Le produit obtenu à l'issue de cette dernière concentration à sec était séché sous vide à 100-120°C pendant 24 heures.

Pour chacun des hémi-esters de potassium ainsi préparés, on déterminait la formule brute par analyse élémentaire puis la formule développée à partir des résultats des analyses par infra rouge et par RMN du proton ($D_2O$ comme solvant).

Dans le tableau I on donne pour chaque essai le diester de départ avec sa formule développée ainsi que l'hémi-ester obtenu avec sa formule développée et le rendement de l'hydrolyse en hémi-ester exprimé en % molaire.

TABLEAU I

| DIESTER | HEMI-ESTER | Rendement (%) |
|---|---|---|
| Benzyl phosphonate de diéthyle: 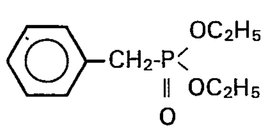 | Benzyl phosphonate d'éthyle et de potassium: 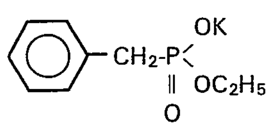 | 92,7 |

TABLEAU I (Suite)

| DIESTER | HEMI-ESTER | Rendement (%) |
|---|---|---|
| Bromo-4 benzylphosphonate de diéthyle: 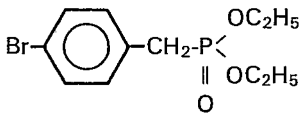 | Bromo-4 benzylphosphonate d'éthyle et de potassium: 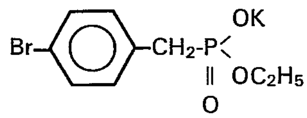 | 78 |
| Phénylphosphonate de diéthyle: 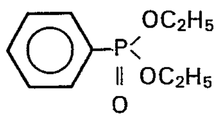 | Phénylphosphonate d'éthyle et de potassium 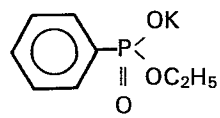 | 82 |
| Peraxylylènediphosphonate de tétraéthyle: 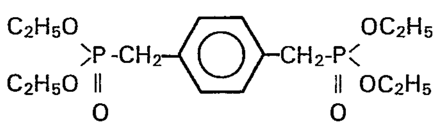 | Paraxylylènediphosphonate de diéthyle et de dipotassium: 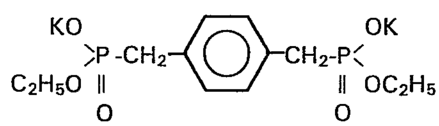 | 87,8 |
| Paraxylylènediphosphonate de tétraméthyle: 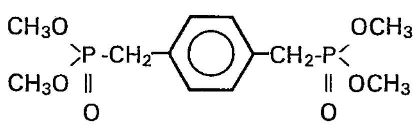 | Peraxylènediphosphonate de diméthyle et de dipotassium: 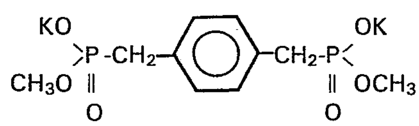 | 65 |
| Diphénylène-4,4' diphosphonate de tétraéthyle: 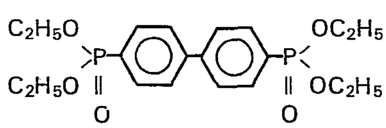 | Diphénylène-4,4' diphosphonate de diéthyle et de dipotassium 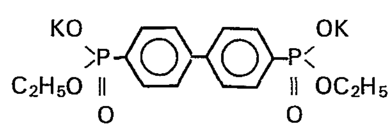 | 90,6 |
| Paraphénylène diphosphonate de tétraéthyle: 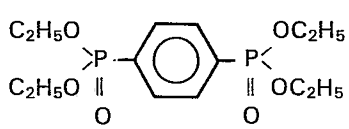 | Paraphénylène diphosphonate de diéthyle et de dipotassium: 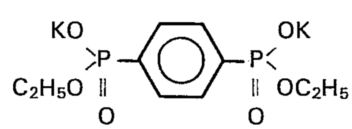 | 94,7 |
| Cyclohexylméthylphosphonate de diéthyle: 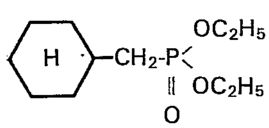 | Cyclohexylméthylphosphonate d'éthyle et de potassium: 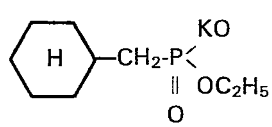 | 93 |

*Exemples 2 à 4:*

*Comportement au feu de compositions de polycarbonates renfermant les additifs ignifugeants de l'exemple 1*

Sur des éprouvettes obtenues comme décrit précédemment à partir de mélanges d'un polycarbonate et de concentrations variables de l'un des hémi-esters de potassium décrit dans l'exemple 1, on effectuait l'essai de détermination de l'indice limite d'oxygène (L.O.I.) et l'essai de combustion UL-94.

A titre de polycarbonate, on utilisait chacun de trois polycarbonates commerciaux obtenus par réaction interfaciale entre le phosgène et le bisphénol A et présentant des masses moléculaires viscosimétriques égales respectivement à environ 25 000 (exemple 2), 22 000 (exemple 3), et 27 000 (exemple 4).

Les resultats de ces essais sont consignés dans le tableau II.

La concentration en additif hémi-ester de la composition de polycarbonate est donnée en ‰ en poids par rapport au polycarbonate.

Dans l'essai UL-94 le temps moyen de combustion correspond à la durée totale de combustion avec flammes divisée par 10 (nombre d'applications de la flamme).

TABLEAU II

| EXEMPLE | SERIE | HEMI-ESTER DE POTASSIUM | | L.O.I. | ESSAI UL-94 | | |
|---|---|---|---|---|---|---|---|
| | | Nature | Concentration ‰ | | Temps moyen de combustion (s) | Classement | Observations |
| 2 | a | Aucun (témoin) | | 25 | 21 | V2 | Gouttage important |
| | b | Benzylphosphonate d'éthyle et de potassium | 1 | 35 | 2 | V2 | |
| | | | 0,5 | 33,6 | 1,9 | V2 | 2 éprouvettes VO |
| | | | 0,1 | 32 | 4 | V2 | |
| | c | Phénylphosphonate d'éthyle et de potassium | 1 | 34 | 1,44 | V2 | 1 éprouvette VO |
| | | | 0,5 | 34 | 1,40 | V2 | 4 éprouvettes VO |
| | | | 0,1 | 31 | 1,3 | V2 | 1 éprouvette VO |
| | d | Paraxylylène diphosphonate de diéthyle de dipotassium | 1 | 31,6 | 3,3 | V2 | |
| | | | 0,2 | 32 | 2,9 | V2 | 2 gouttes par éprouvettes |
| | | | 0,1 | 30 | 4,2 | V2 | 1 goutte par éprouvette |
| | e | Paraxylylène diphosphonate de diméthyle et de dipotassium | 0,2 | 31,6 | 3,5 | V2 | |
| | f | Diphénylène-4,4' diphosphonate de diéthyle et de dipotassium | 0,2 | 31,4 | 2,7 | V2 | |
| | g | Paraphénylène diphosphonate de diéthyle et de dipotassium | 0,2 | 30 | 3,8 | V2 | |
| | | | 0,5 | 31,3 | 5,4 | V2 | 1 goutte par éprouvette |
| | | | 0,3 | 31,8 | 3,8 | V2 | |
| 3 | a | Aucun (témoin) | | 25 | 14 | V2 | gouttage important |
| | b | Bromo-4 benzyl phosphonate d'éthyle et de potassium | 0,2 | 30,4 | 4,3 | V2 | |
| | c | Cyclohexylméthylphosphonate d'éthyle et de potassium | 1 | 39,8 | 1,6 | V2 | 2 éprouvettes VO |
| 4 | a | Aucun (témoin) | | 24,4 | | Brûle | |
| | b | Paraphénylène diphosphonate de diéthyle et de dipotassium | 0,3 | 32 | 6,7 | V2 | 3 éprouvettes V1 |

Au vu des résultats des exemples ci-dessus, il apparaît que les additifs ignifugeant de l'invention améliorent d'une façon importante le comportement au feu du polycarbonate. On observe en effet pour de très faibles teneurs en additif, à savoir 0,1 ‰ à 1 ‰, une augmentation importante de l'indice d'oxygène. Par ailleurs dans l'essai UL-94, on observe des temps moyens de combustion très courts, inférieurs dans la majeure partie des cas à 5 secondes, alors que les témoins brûlent pendant 14 à 21 secondes voire entièrement. On doit également signaler une diminution importante du gouttage. Dans certains cas (exemples 2b, 2c, 3c) un certain nombre d'éprouvettes ne donnent aucune goutte et ont des temps moyens de combustion inférieurs à 5 secondes, c'est la raison pour laquelle il leur a été attribué un classement VO dans la colonne «observations».

Ces exemples montrent bien que les compositions de l'invention constituent un progès technologique important dans l'amélioration du comportement au feu du polycarbonate, cette amélioration étant obtenue par utilisation de très faibles quantités d'additifs, ce qui permet en outre de conserver au polycarbonate ainsi ignifugé ses propriétés mécaniques d'origine et sa transparence.

*Exemple 5*

En suivant le mode opératoire défini précédemment, on préparait une composition de polycarbonate à partir du polycarbonate utilisé dans l'exemple 2 renfermant, par rapport au polycarbonate, 0,5‰ en poids de paraphénylène diphosphonate de diéthyle et de dipotassium, à titre d'additif ignifugeant, et 0,5% en poids d'un polytétrafluoroéthylène commercial obtenu par polymérisation de tétrafluoroéthylène en émulsion aqueuse et possédant une masse moléculaire en poids d'environ 600 000.

A partir de cette composition, on préparait les éprouvettes nécessaires à la réalisation des essais de détermination de l'indice d'oxygène et de combustion UL-94.

L'indice limite d'oxygène était égal à 30. En outre, dans l'essai UL-94, on obtenait un classement VO avec un temps moyen de combustion égal à 2,7 secondes, les éprouvettes, non transparentes, ne gouttant pas.

*Exemple 6*

Selon un mode opératoire analogue à celui défini précédemment, on préparait une composition de polycarbonate à partir du polycarbonate de l'exemple 2 renfermant, par rapport au polycarbonate, 30% en poids de fibres de verre broyées et 0,5‰ en poids de paraphénylène diphosphonate de diéthyle et de dipotassium.

A partir de cette composition on préparait les éprouvettes nécessaires à la réalisation des essais de détermination de l'indice d'oxygène d'une part et de comportement au feu par la méthode à l'épiradiateur d'autre part. Cette méthode est décrite en détail dans les normes NF P 92501 et NF P 92505 du CENTRE SCIENTIFIQUE ET TECHNIQUES DU BATIMENT.

L'indice d'oxygène était égal à 40,5. De plus on obtenait le classement au feu M3 à l'essai à l'épiradiateur. Par contre en supprimant les 0,5‰ d'additif ignifugeant, on obtenait un indice d'oxygène égal seulement à 34,5 et le matériau était classé M4 à l'essai à l'épiradiateur (comportement au feu moins bon que dans l'essai en présence de l'additif ignifugeant).

## Revendications

1. Composition de résine synthétique ayant une bonne résistance au feu, renfermant un polycarbonate, un additif ignifugeant non réactif dérivé d'acide phosphonique, et éventuellement d'autres additifs et/ou des charges, caractérisé en ce que l'additif ignifugeant répond à la formule générale

$$Y\left[-(CH_2)_n-\overset{\displaystyle O}{\overset{\|}{P}}\begin{matrix}OM\\OR\end{matrix}\right]_q$$

dans laquelle:

Y désigne un reste organique q-valent dérivé, par perte de q atomes d'hydrogène, d'un membre du groupe formé par les cycloalcanes en $C_6$ à $C_8$, les hydrocarbures benzéniques en $C_6$ à $C_{12}$, les hydrocarbures aromatiques di- ou trinucléaires à noyau enchaînés en $C_{12}$ à $C_{20}$, les hydrocarbures aromatiques di- ou trinucléaires à noyaux condensés en $C_{10}$ à $C_{20}$, les composés aromatiques de formule Ar-Z-Ar dans laquelle Ar est un radical arylique monovalent en $C_6$ à $C_{12}$ et Z représente -S-, -O-, $-SO_2-$, -SO-, -CO-, et les dérivés bromés ou chlorés desdits hydrocarbures et composés aromatiques,

q est un nombre prenant les valeurs 1, 2, 3,

n est un nombre égal à 0, 1, 2,

R est un reste alcoyle en $C_1$ à $C_6$, un radical phényle ou un radical cyclohexyle, et

M désigne un atome de métal alcalin choisi parmi Li, Na, et K,

ledit additif ignifugeant étant utilisé en concentration pondérale allant de 0,1 ‰ à 4 ‰ par rapport au polycarbonate.

2. Composition suivant la revendication 1, caractérisé en ce que l'additif ignifugeant est choisi parmi ceux répondant à la formule

$$Y_1-(CH_2)_m-\overset{\displaystyle O}{\overset{\|}{P}}\begin{matrix}OM\\OR_1\end{matrix}$$

dans laquelle $Y_1$ désigne un reste monovalent dérivé, par perte d'un atome d'hydrogène nucléaire, d'un composé choisi parmi le benzène, le toluène, l'éthylbenzène, le bromobenzène, le cyclohexane, et le diphényléther, et $R_1$ est un radical méthyle ou éthyle.

3. Composition suivant la revendication 1, caractérisée en ce que l'additif ignifugeant est choisi parmi ceux répondant à la formule

$$\begin{matrix}MO\\R_1O\end{matrix}\overset{\displaystyle O}{\overset{\|}{P}}-Y_2-\overset{\displaystyle O}{\overset{\|}{P}}\begin{matrix}OM\\OR_1\end{matrix}$$

dans laquelle $Y_2$ représente un reste divalent dérivé, par perte de deux atomes d'hydrogène situés chacun sur un noyau différent, d'un composé choisi dans le groupe formé par le diphényle, le diphényloxyde, la diphénylsulfone, le diphényl-2,2 propane, et le naphthalène, et $R_1$ est un radical méthyle ou éthyle.

4. Composition suivant la revendication 1, caractérisée en ce que l'additif ignifugeant est choisi partmi ceux répondant à la formule

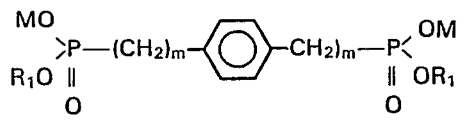

dans laquelle m représente zéro ou 1, et $R_1$ est un radical méthyle ou éthyle.

5. Composition suivant la revendication 1, caractérisée en ce que l'additif ignifugeant est choisi parmi ceux répondant à la formule

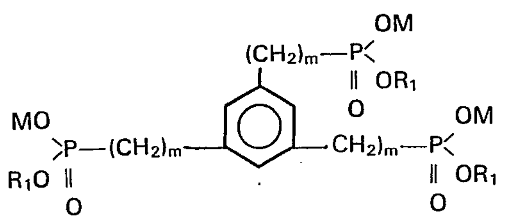

dans laquelle m représente zéro ou 1, et $R_1$ désigne un radical méthyle ou éthyle.

6. Composition suivant l'une des revendications 1 à 5, caractérisée en ce que l'atome de métal alcalin M est un atome de potassium.

7. Composition suivant la revendication 1, caractérisée en ce que l'additif ignifugeant est choisi dans le groupe formé par le phénylphosphonate d'éthyle et de potassium, le benzylphosphonate d'éthyle et de potassium, le benzylphosphonate de méthyle et de potassium, le bromo-4 benzylphosphonate de éthyle et de potassium, le paraxylylènediphosphonate de diéthyle et de dipotassium, le paraxylylène diphosphonate de diméthyle et de dipotassium, le paraphénylène diphosphonate de diéthyle et de dipotassium, le cyclohexylméthylphosphonate d'éthyle et de potassium, et le diphénylène-4,4' diphosphonate de diéthyle et de dipotassium.

8. Composition suivant l'une des revendications 1 à 7, caractérisée en ce que le polycarbonate est un polycarbonate ou copolycarbonate dérivant d'un ou plusieurs bisphénols choisis parmi le bis(hydroxy-4 phényl)-2,2 propane, le bis(diméthyl-3,5 hydroxy-4 phényl)-2,2-propane, et le bis (hydroxy-4 phényl)-1,1 cyclohexane.

9. Composition suivant l'une des revendications 1 à 8, caractérisée en ce que la teneur en additif ignifugeant va de 0,1‰ à 1,5‰ en poids par rapport au polycarbonate.

10. Composition suivant l'une des revendications 1 à 9, caractérisée en ce qu'elle renferme des fibres de verre, notamment en proportions allant de 10 à 35% en poids du polycarbonate.

11. Composition suivant l'une des revendications 1 à 10, caractérisée en ce qu'elle renferme un agent diminuant le gouttage, et notamment un polysiloxanne ou un polytétrafluoroéthylène.

12. Composition suivant la revendication 11, caractérisée en ce que l'agent diminuant le gouttage est un polytétrafluoroéthylène utilisé en quantité allant de 0,1% à 1% en poids par rapport au polycarbonate.

13. Composition suivant l'une des revendications 1 à 12, caractérisée en ce que le polycarbonate à une masse moléculaire viscosimétrique entre 15 000 et 60 000 et de préférence entre 20 000 et 40 000.

14. Hémi-ester d'acide phosphonique répondant à la formule générale

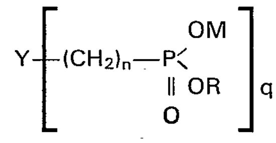

dans laquelle:

Y désigne un reste organique q-valent dérivé, par perte de q atomes d'hydrogène, d'un membre du groupe formé par les cycloalcanes en $C_6$ à $C_8$, les hydrocarbures benzéniques en $C_6$ à $C_{12}$, les hydrocarbures aromatiques di- ou trinucléaires à noyau enchaînés en $C_{12}$ à $C_{20}$, les hydrocarbures aromatiques di- ou trinucléaires à noyaux condensés en $C_{10}$ à $C_{20}$, les composés aromatiques de formule Ar-Z-Ar dans laquelle Ar est un radical arylique monovalent en $C_6$ à $C_{12}$ et Z représente -S-, -O-, $-SO_2-$, -SO-, -CO-, et les dérivés bromés ou chlorés desdits hydrocarbures et composés aromatiques,

q est un nombre prenant les valeurs 1, 2, 3,

n est un nombre égal à 0, 1, 2,

R est un reste alcoyle en $C_1$ à $C_6$, un radical phényle ou un radical cyclohexyle, et

M désigne Li, Na ou K.

15. Hémi-ester suivant la revendication 14, caractérisée en ce qu'il répond à la formule

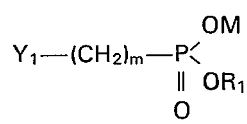

dans laquelle $Y_1$ désigne un reste monovalent dérivé, par perte d'un atome d'hydrogène nucléaire, d'un composé choisi parmi le benzène, le toluène, l'éthylbenzène, le bromobenzène, le cyclohexane, et le diphényléther, et $R_1$ est un radical méthyle ou éthyle.

16. Hémi-ester suivant la revendication 14, caractérisé en ce qu'il répond à la formule

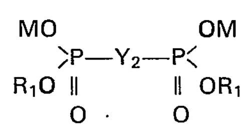

dans laquelle $Y_2$ représente un reste divalent dérivé, par perte de deux atomes d'hydrogène situés chacun sur un noyau différent, d'un composé choisi dans le groupe formé par le diphényle, le diphényloxyde, la

diphénylsulfone, le diphényl-2,2 propane, et le naphthalène, et $R_1$ est un radical méthyle ou éthyle.

17. Hémi-ester suivant la revendication 14, caractérisé en ce qu'il répond à la formule

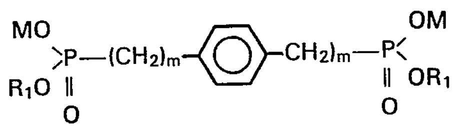

dans laquelle m représente 0 ou 1, et $R_1$ est un radical méthyle ou éthyle.

18. Hémi-ester suivant la revendication 14, caractérisé en ce qu'il est défini par la formule

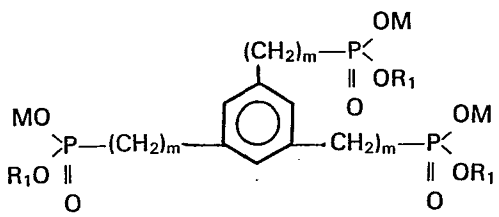

dans laquelle m représente 0 ou 1, et $R_1$ est un radical méthyle ou éthyle.

19. Hémi-ester suivant l'une des revendications 14 à 18, caractérisé en ce que l'atome M est un atome de potassium.

20. Hémi-ester suivant la revendication 14, caractérisé en ce qu'il consiste en un composé choisi dans le groupe formé par le phénylphosphonate de éthyle et de potassium, le benzylphosphonate de éthyle et de potassium, le benzylphosphonate de méthyle et de potassium, le bromo-4 benzylphosphonate d'éthyle et de potassium, le paraxylylène diphosphonate de diéthyle et de dipotassium, le paraxylylène diphosphonate de diméthyle et de dipotassium, le paraphénylène diphosphonate de diéthyle et de dipotassium, le cyclohexylméthylphosphonate d'éthyle et de potassium, et le diphénylène-4,4 diphosphonate de diéthyle et de dipotassium.

**Patentansprüche**

1. Kunstharzmasse mit hoher Feuerfestigkeit, enthaltend ein Polycarbonat, ein Phosphonsäure-Derivat als nicht reaktionsfähiges, Feuerfestigkeit verleihendes Zusatzmittel und möglicherweise andere Zusatzmittel und/oder Beschickungsmittel, dadurch gekennzeichnet, dass das Feuerfestigkeit verleihende Zusatzmittel der allgemeinen Formel

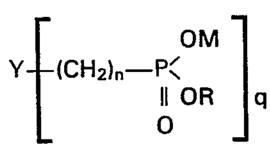

entspricht, worin

Y ein q-wertiger organischer Rest ist, abgeleitet durch den Verlust von q Wasserstoffatomen aus einem Mitglied der Gruppe bestehend aus den $C_6$ bis $C_8$-Cycloalkanen, den $C_6$ bis $C_{12}$-Benzolkohlenwasserstoffen, den aromatischen 2- oder 3-kernigen $C_{12}$ bis $C_{20}$-Kohlenwasserstoffen mit verketteten Ringen, den aromatischen 2- oder 3-kernigen $C_{10}$ bis $C_{20}$-Kohlenwasserstoffen mit kondensierten Ringen, den aromatischen Verbindungen mit der Formel Ar-Z-Ar, worin Ar ein einwertiger $C_6$ bis $C_{12}$-Arylrest ist und Z -S-, -O-, -SO-, $-SO_2-$, -CO- darstellt, und den Brom und Chlorderivaten der genannten Kohlenwasserstoffe und aromatischen Verbindungen,

q 1, 2 oder 3 ist,

n 0, 1 oder 2 ist,

R ein $C_1$ bis $C_6$-Alkylrest, ein Phenylrest oder ein Cyclohexylrest ist und

M ein alkalisches Metallatom ist, ausgewählt aus der Gruppe bestehend aus Li, Na und K,

wobei der Feuerfestigkeit verleihende Zusatz in einer Gewichtskonzentration von 0,1 bis 0,4‰, bezogen auf das Polycarbonat, verwendet wird.

2. Masse nach Anspruch 1, dadurch gekennzeichnet, dass das Feuerfestigkeit verleihende Zusatzmittel der Formel

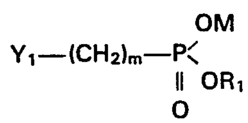

entspricht, worin

$Y_1$ ein einwertiger Rest ist, abgeleitet durch Verlust eines Ring-Wasserstoffatoms von einer Verbindung, ausgewählt aus der Gruppe bestehend aus Benzol, Toluol, Ethylbenzol, Brombenzol, Cyclohexan und Diphenylether und

$R_1$ ein Methyl- oder Ethyl-Rest ist.

3. Masse nach Anspruch 1, dadurch gekennzeichnet, dass das Feuerfestigkeit verleihende Zusatzmittel der Formel

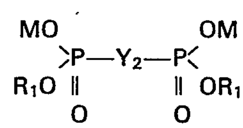

entspricht, worin

$Y_2$ ein zweiwertiger Rest ist, der durch den Verlust von zwei Wasserstoffatomen, von denen sich jedes an einem verschiedenen Kern befindet, abgeleitet ist von einer Verbindung, ausgewählt aus der Gruppe bestehend aus Diphenyl, Diphenyloxid, Diphenylsulfon, Diphenyl-2,2-propanm und Naphthalin und

$R_1$ ein Methyl- oder Ethyl-Rest ist.

4. Masse nach Anspruch 1, dadurch gekennzeichnet, dass das Feuerfestigkeit verleihende Zusatzmittel der Formel

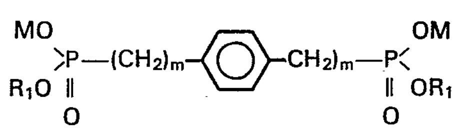

entspricht, worin m 0 oder 1 und $R_1$ ein Methyl- oder Ethyl-Rest ist.

5. Masse nach Anspruch 1, dadurch gekennzeichnet, dass das Feuerfestigkeit verleihende Zusatzmittel der Formel

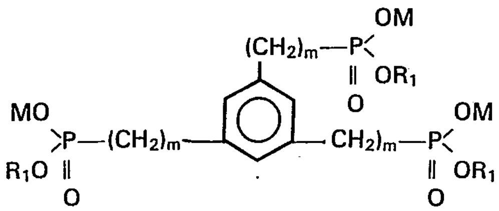

entspricht, worin m 0 oder 1 und $R_1$ ein Methyl- oder Ethyl-Rest ist.

6. Masse nach einem der Ansprüche 1 bis 5, dadurch gekennzeichnet, dass das alkalische Metallatom ein Kalium-Atom ist.

7. Masse nach Anspruch 1, dadurch gekennzeichnet, dass das Feuerfestigkeit verleihende Zusatzmittel ausgewählt wird aus der Gruppe bestehend aus Ethyl-Kalium-Phenylphosphonat, Ethyl-Kalium-Benzylphosphonat, Methyl- Kalium-Benzylphosphonat, Ethyl- Kalium-Brom-4-benzylphosphonat, Diethyl- Dikalium-Paraxylylendiphosphonat, Dimethyl- Dikalium-Paraxylylendiphosphonat, Diethyl-Dikalium-Paraphenylendiphosphonat, Ethyl- Kalium-Cyclohexylmethylphosphonat und Diethyl- Dikalium-Diphenylen-4,4'-diphosphonat.

8. Masse nach einem der Ansprüche 1 bis 7, dadurch gekennzeichnet, dass das Polycarbonat ein Polycarbonat oder ein Copolycarbonat ist, abgeleitet aus einem oder mehreren Bisphenolen ausgewählt aus der Gruppe bestehend aus Bis(hydroxy-4-phenyl)-2,2-propan, Bis(dimethyl-3,5-hydroxy-4-phenyl)-2,2-propan und Bis(hydroxy-4-phenyl)-1,1-cyclohexane.

9. Masse nach einem der Ansprüche 1 bis 8, dadurch gekennzeichnet, dass der Anteil an Feuerfestigkeit verleihendem Zusatzmittel zwischen 0,1 bis 1,5 Gew.-‰, bezogen auf das Polycarbonat, liegt.

10. Masse nach einem der Ansprüche 1 bis 9, dadurch gekennzeichnet, dass sie Glasfasern enthält, vorzugsweise in einem Verhältnis von 10 bis 35 Gew.-% des Polycarbonats.

11. Masse nach einem der Ansprüche 1 bis 10, dadurch gekennzeichnet, dass sie ein tropfhemmendes Mittel, vorzugsweise ein Polysiloxan oder ein Polytetrafluorethylen, enthält.

12. Masse nach Anspruch 11, dadurch gekennzeichnet, dass das tropfhemmende Mittel ein Polytetrafluorethylen ist, das in einer Menge von 0,1 bis 1 Gew.-%, bezogen auf das Polycarbonat, verwendet wird.

13. Masse nach einem der Ansprüche 1 bis 12, dadurch gekennzeichnet, dass das Polycarbonat eine Viskositätsmolekularmasse zwischen 15 000 und 60 000, vorzugsweise zwischen 20 000 und 40 0000, hat.

14. Hemiester aus einer Phosphonsäure der allgemeinen Formel

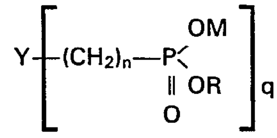

worin

Y ein q-wertiger organischer Rest ist, abgeleitet durch den Verlust von q Wasserstoffatomen aus einem Mitglied der Gruppe bestehend aus den $C_6$ bis $C_8$-Cycloalkanen, den $C_6$ bis $C_{12}$-Benzolkohlenwasserstoffen, den aromatischen 2- oder 3-kernigen $C_{12}$ bis $C_{20}$-Kohlenwasserstoffen mit verketteten Ringen, den aromatischen 2- oder 3-kernigen $C_{10}$ bis $C_{20}$-Kohlenwasserstoffen mit kondensierten Ringen, den aromatischen Verbindungen mit der Formel Ar-Z-Ar, worin Ar ein einwertiger $C_6$ bis $C_{12}$-Arylrest ist und Z -S-, -O-, -SO-, $-SO_2-$, -CO- darstellt, und den Brom und Chlorderivaten der genannten Kohlenwasserstoffe und aromatischen Verbindungen,

q 1, 2 oder 3 ist,

n 0, 1 oder 2 ist,

R ein $C_1$ bis $C_6$-Alkylrest, ein Phenylrest oder ein Cyclohexylrest ist und

M ein alkalisches Metallatom ist, ausgewählt aus der Gruppe bestehend aus Li, Na und K,

wobei der Feuerfestigkeit verleihende Zusatz in einer Gewichtskonzentration von 0,1 bis 0,4‰, bezogen auf das Polycarbonat, verwendet wird.

15. Hemiester nach Anspruch 14, dadurch gekennzeichnet, dass er der Formel

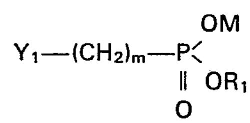

entspricht, worin

$Y_1$ ein einwertiger Rest ist, abgeleitet durch Verlust eines Ring-Wasserstoffatoms aus einer Verbindung, ausgewählt aus der Gruppe bestehend aus Benzol, Toluol, Ethylbenzol, Brombenzol, Cyclohexan und Diphenylether und

$R_1$ ein Methyl- oder Ethyl-Rest ist.

16. Hemiester nach Anspruch 14, dadurch gekennzeichnet, dass er der Formel

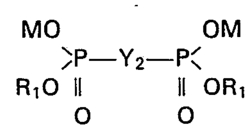

entspricht, worin

$Y_2$ ein zweiwertiger Rest ist, der durch den Verlust von zwei Wasserstoffatomen, von denen sich jedes an einem verschiedenen Kern befindet, abgeleitet ist von einer Verbindung, ausgewählt aus der Gruppe bestehend aus Diphenyl, Diphenyloxid, Diphenylsulfon, Diphenyl-2,2-propanm und Naphthalin und

$R_1$ ein Methyl- oder Ethyl-Rest ist.

17. Hemiester nach Anspruch 14, dadurch gekennzeichnet, dass er der Formel

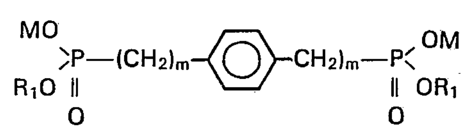

entspricht, worin m 0 oder 1 und $R_1$ ein Methyl- oder Ethyl-Rest ist.

18. Hemiester nach Anspruch 14, dadurch gekennzeichnet, dass er durch die Formel

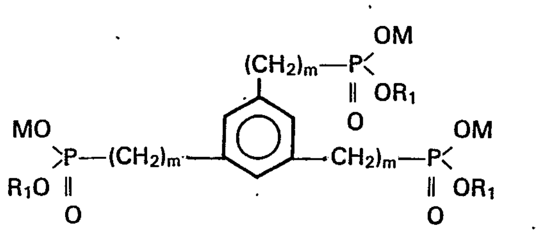

definiert ist, worin m 0 oder 1 und $R_1$ ein Methyl- oder Ethyl-Rest ist.

19. Hemiester nach einem der Ansprüche 14 bis 18, dadurch gekennzeichnet, dass das Atom M ein Kaliumatom ist.

20. Hemiester nach Anspruch 14, dadurch gekennzeichnet, dass er aus einer Verbindung besteht, ausgewählt aus der Gruppe bestehend aus Ethyl-Kaliumphenylphosphonat, Ethyl-Kaliumbenzylphosphonat, Methyl- Kaliumbenzylphosphonat, Ethyl-Kalium-Brom-4-benzylphosphonat, Diethyl- Dikalium-Paraxylylendiphosphonat, Dimethyl- Dikalium-paraxylylendiphosphonat, Diethyl- Dikalium-Paraphenylendiphosphonat, Ethyl- Kalium-Cyclohexylmethylphosphonat und Diethyl- Dikalium-Diphenylen-4,4'-diphosphonat.

**Claims**

1. A fire-resistant synthetic resin composition, containing a polycarbonate, a non-reactive fireproofing additive derived from phosphonic acid, and optionally other additives and/or fillers, characterised in that the fireproofing additive has the general formula

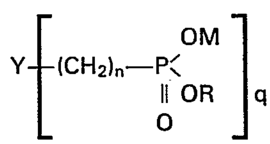

where:

Y is a q-valent organic radical derived, by the loss of q hydrogen atoms, from one of the group consisting of cycloalkanes containing 6 to 8 carbon atoms, benzene hydrocarbons containing 6 to 12 carbon atoms, di- or trinuclear aromatic hydrocarbons with enchained nuclei containing 12 to 20 carbon atoms, di- or trinuclear aromatic hydrocarbons with condensed nuclei containing 10 to 20 carbon atoms, aromatic compounds witth the formula Ar-Z-Ar, in which Ar is a monovalent aryl radical containing 6 to 12 carbon atoms, and Z represents -S-, -O-, $-SO_2-$, -SO-, -CO-, and brominated or chlorinated derivatives of such hydrocarbons and aromatic compounds,

q is a number equal to 1, 2, 3,

n is a number equal to 0, 1, 2,

R is an alkyl radical containing 1 to 6 carbon atoms, a phenyl radical or a cyclohexyl radical, and

M is an atom of an alkali metal selected from Li, Na and K,

the concentration of fireproofing additive in relation with polycarbonate being 0.1‰ to 4‰ by weight.

2. A composition according to claim 1, in which the fireproofing additive is selected from those with the formula

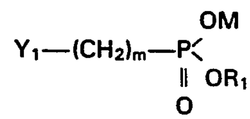

where $Y_1$ is a monovalent radical derived, by the loss of a nuclear hydrogen atom, from a compound selected from benzene, toluene, ethylbenzene, bromobenzene, cyclohexane and diphenylether, and $R_1$ is a methyl or ethyl radical.

3. A composition according to claim 1, in which the fireproofing additive is selected from those with the formula

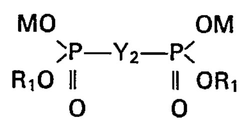

where $Y_2$ is a divalent radical derived, by the loss of two hydrogen atoms, each located in a different nucleus, from a compound selected from the group consisting of diphenyl, diphenyloxide, diphenylsulfone, diphenyl-2.2 propane and naphthalene, and $R_1$ is a methyl or ethyl radical.

4. A composition according to claim 1, in which the fireproofing additive is selected from those with the formula

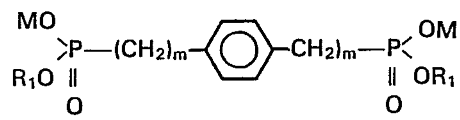

where m is equal to zero or 1, and $R_1$ is a methyl or ethyl radical.

5. A composition according to claim 1, in which the fireproofing additive is selected from those with the formula

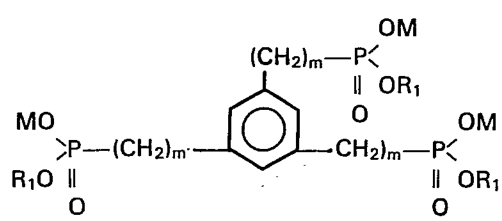

where m is equal to zero or 1, and $R_1$ is a methyl or ethyl radical.

6. A composition according to any of claims 1 to 5, in which the alkali metal atom M is a potassium atom.

7. A composition according to claim 1, in which the fireproofing additive is selected from the group consisting of ethyl and potassium phenylphosphonate, ethyl and potassium benzylphosphonate, methyl and potassiumn benzylphosphonate, ethyl and potassium 4-bromo benzylphosphonate, diethyl and dipotassium paraxylylene diphosphonate, dimethyl and dipotassium paraxylylene diphosphonate, diethyl and dipotassium paraphenylene diphosphonate, ethyl and potassium cyclohexylmethylphosphonate, and diethyl and dipotasssium diphenylene-4.4′ diphosphonate.

8. A composition according to any of claims 1 to 7, in which the polycarbonate is a polycarbonate or copolycarbonate derived from one or more bisphenols selected from 2.2-bis (4-hydroxyphenyl)-propane, 2.2-bis (3.5-dimethyl 4-hydroxyphenyl)-propane and 1.1-bis (4-hydroxyphenyl)-cyclohexane.

9. A composition according to any of claims 1 to 8, in which the concentration of fireproofing additive is from 0.1‰ to 1.5‰ by weight in relation to polycarbonate.

10. A composition according to any of claims 1 to 9, characterised by the fact that it contains glass fibre, more particularly in amounts ranging from 10 to 35% of the weight of polycarbonate.

11. A composition according to any of claims 1 to 10, characterised by the fact that it contains an agent to reduce dripping, and in particular a polysiloxane or a polytetrafluoroethylene.

12. A composition according to claim 11, in which the drip-reducing agent is a polytetrafluoroethylene used in an amount of from 0.1 to 1% by weight in relation to polycarbonate.

13. A composition according to any of claims 1 to 12, in which the polycarbonate has a viscosimetric molecular weight between 15 000 and 60 000 and preferably between 20 000 and 40 000.

14. Hemiester of phosphonic acid having the general formula

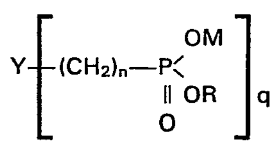

where:

Y is a q-valent organic radical derived, by the loss of q hydrogen atoms, from one of the group consisting of cycloalkanes containing 6 to 8 carbon atoms, benzene hydrocarbons containing 6 to 12 carbon atoms, di- or trinuclear aromatic hydrocarbons with enchained nuclei containing 12 to 20 carbon atoms, di- or trinuclear aromatic hydrocarbons with condensed nuclei containing 10 to 20 carbon atoms, aromatic compounds with the formula Ar-Z-Ar, in which Ar is a monovalent aryl radical containing 6 to 12 carbon atoms, and Z represents -S-, -O-, $-SO_2-$, -SO-, -CO-, and brominated or chlorinated derivatives of such hydrocarbons and aromatic compounds,

q is a number equal to 1, 2, 3,

n is a number equal to 0, 1, 2,

R is an alkyl radical containing 1 to 6 carbon atoms, a phenyl radical or a cyclohexyl radical, and

M represents Li, Na or K.

15. Hemiester according to claim 14, characterised in that it has the formula

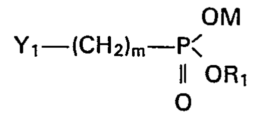

where $Y_1$ is a monovalent radical derived, by the loss of a nuclear hydrogen atom, from a compound selected from benzene, toluene, ethylbenzene, bromobenzene, cyclohexane and diphenylether, and $R_1$ is a methyl or ethyl radical.

16. Hemiester according to claim 14, characterised in that it has the formula

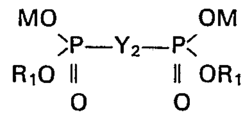

where $Y_2$ is a divalent radical derived, by the loss of two hydrogen atoms, each located in a different nucleus, from a compound selected from the group consisting of diphenyl, diphenyloxide, diphenylsulfone, 2.2-diphenyl-propane and naphthalene, and $R_1$ is a methyl or ethyl radical.

17. Hemiester according to claim 14, characterised in that it has the formula

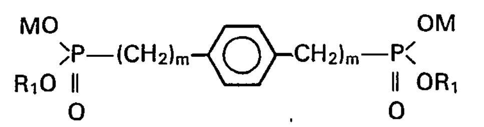

where m is zero or 1, and $R_1$ is a methyl or ethyl radical.

18. Hemiester according to claim 14, characterised in that it has the formula

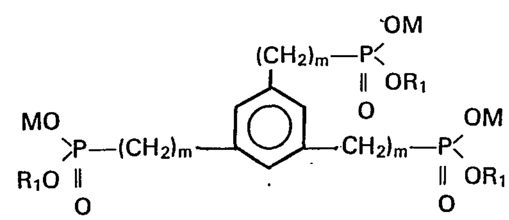

where m is zero or 1 and $R_1$ is a methyl or ethyl radical.

19. Hemiester according to any of claims 14 to 18, in which the alkali metal atom M is a potassium atom.

20. Hemiester according to claim 14, characterised in that it is selected from the group consisting of ethyl and potassium phenylphosphonate, ethyl and potassium benzylphosphonate, methyl and potassium benzylphosphonate. ethyl and potassium 4-bromobenzylphosphonate, diethyl and dipotassium paraxylylene diphosphonate, dimethyl and dipotassium paraxylylene diphosphonate, diethyl and dipotassium paraphenylene diphosphonate, ethyl and potassium cyclohexylmethylphosphonate and diethyl and dipotassium diphenylene-4.4′ diphosphonate.